Europäisches Patentamt

(19) European Patent Office

Office européen des brevets

(11) Numéro de publication : **0 031 757**
**B1**

# FASCICULE DE BREVET EUROPÉEN

(45) Date de publication du fascicule du brevet :
**26.10.83**

(21) Numéro de dépôt : **80401802.6**

(22) Date de dépôt : **16.12.80**

(51) Int. Cl.³ : **B 61 F   7/00**

(54) **Ensemble roues-essieu pour véhicule ferroviaire à écartement variable.**

(30) Priorité : **21.12.79 FR 7931480**

(43) Date de publication de la demande :
**08.07.81 Bulletin 81/27**

(45) Mention de la délivrance du brevet :
**26.10.83 Bulletin 83/43**

(84) Etats contractants désignés :
**AT BE CH DE GB IT LI LU NL SE**

(56) Documents cités :
**DE C 47 734**
**FR A 495 463**
**FR A 697 666**
**FR A 1 399 622**
**FR A 2 064 459**
**GB A 378 275**
**GB A 412 691**

(73) Titulaire : **SOTRAMEF Société dite:**
**5 rue Brémontier**
**F-87000 Limoges (FR)**

(72) Inventeur : **Gentil, Marc Louis**
**44, l'Orée de Marly**
**F-78590 Noisy le Roi (FR)**

(74) Mandataire : **Barnay, André François et al**
**Cabinet Barnay 80 rue Saint-Lazare**
**F-75009 Paris (FR)**

Jouve, 18, rue St-Denis, 75001 Paris, France

Ensemble roues-essieu pour véhicule ferroviaire à écartement variable

L'invention se rapporte aux organes de roulement pour véhicules se déplaçant sur voies ferrées.

La différence d'écartement que présentent les voies ferrées de pays limitrophes tels que la France et l'Espagne est un obstacle à la circulation des trains devant se rendre d'un pays dans l'autre.

Deux méthodes sont actuellement utilisées pour surmonter cet obstacle. Elles permettent de modifier l'écartement des roues porteuses des wagons ou voitures de voyageurs, l'une sans changement, l'autre avec changement des organes de roulement.

La première méthode, connue sous l'appellation de « système Talgo », met en œuvre une rame spéciale dont les organes de roulement sont conçus de manière que les roues passent progressivement d'un écartement à l'autre en franchissant une zone évolutive interposée entre la voie à l'écartement français et la voie à l'écartement espagnol. De part et d'autre de cette zone évolutive, les voies courantes comportent des aménagements agissant sur des organes mécaniques de blocage des roues à un écartement donné afin d'en commander le déverrouillage, puis le reverrouillage une fois la variation d'écartement effectuée. Dans la zone évolutive elle-même, des glissières continues contraignent les roues à suivre l'évolution de la largeur de la voie.

Cette méthode a le grand mérite de ne pas exiger le changement des organes de roulement. Mais, pour éviter toute complication excessive à ceux-ci, on a dû réaliser chaque essieu sous la forme de deux demi-essieux séparés. A cause de cela, le système Talgo ne peut être appliqué en France qu'à des véhicules légers frappés au surplus d'une limitation de vitesse.

Une méthode voisine est illustrée par le brevet français FR-A-495 463, qui a pour objet un essieu monolithique à chaque extrémité duquel peut se déplacer en coulissement une roue par rotation différentielle du moyeu, fileté, de la roue dans un manchon fileté solidaire d'une roue dentée s'engrenant dans une crémaillère prévue entre les rails d'une zone de voie évolutive.

En raison des jeux inévitables au niveau du moyeu et des cliquets prévus pour le verrouillage de la roue, un tel assemblage ne peut manquer de se dégrader assez rapidement sous l'action des efforts verticaux alternés et des à-coups de rotation internes auxquels est soumis l'ensemble roues-essieu en service normal. De plus, il est exclu qu'un moyeu équipé de tels ensembles de roulement se présente à l'envers (en raison d'un retournement sur l'un des réseaux ferroviaires) devant ladite zone de voie évolutive.

Le brevet français FR-A-1 399 622 décrit une méthode proche de la précédente. Chaque roue peut coulisser sur un essieu monolithique entre deux positions où elle est fermement immobilisée par la pose d'une chaîne de calage. Ici encore, si la roue se trouve bien bloquée dans le sens de l'axe de l'essieu, les jeux verticaux et circonférentiels sont cause d'une rapide dégradation des qualités de l'assemblage. Par ailleurs, une main-d'œuvre importante est nécessaire pour manipuler les chaînes de calage.

La seconde méthode consiste à changer les organes de roulement après avoir levé les wagons au moyen d'élévateurs encadrant une voie mixte. La SNCF utilise cette méthode en gare d'Hendaye pour les voitures de voyageurs, par substitution de leurs boggies. La société Transportes ferroviaros especiales SA, dite Transfesa, la pratique également pour son parc de wagons de marchandises dans ses installations de Cerbère et d'Hendaye, mais en n'intervenant qu'au niveau des essieux.

Cette méthode présente l'inconvénient d'exiger des installations de très grande emprise au sol pour stocker soit les boggies, soit les essieux correspondant à l'un et l'autre écartement ; en outre, la manutention de tels organes implique de plus en plus d'équipements mécanisés ainsi qu'un personnel toujours plus nombreux pour répondre aux exigences de l'évolution du trafic.

Dans ces conditions, on comprend que la méthode idéale est certainement une méthode qui mettrait en œuvre des organes de roulement pouvant s'adapter indifféremment aux deux écartements des réseaux ferroviaires voisins, les deux roues d'un même essieu étant toujours, conformément aux normes de sécurité en usage en France, intimement solidaires d'un corps d'essieu monolithique.

L'invention a donc pour objet de proposer un ensemble roues-essieu « à écartement variable » qui, bien que de structure simple et légère, réponde rigoureusement aux critères de sécurité et de fiabilité imposés et puisse être utilisé aussi bien sur wagons de marchandises que sur voitures de voyageurs, et même sur engins moteurs, sans limitation particulière de charge ni de vitesse.

A cet effet, l'invention concerne un ensemble roues-essieu à écartement variable des roues pour véhicule ferroviaire comprenant un essieu monolithique portant une paire de roues déplaçables entre deux positions verrouillées, respectivement d'écartement normal et de grand écartement. Selon l'invention, cet essieu comporte, à chaque extrémité, deux portées coniques dont l'ensemble a la forme d'un diabolo, et chaque roue peut se déplacer par simple translation sous l'action d'un vérin qui soit la repousse vers l'extérieur (par rapport au centre de l'essieu) et la maintient constamment dans sa position de grand écartement où une première portée conique interne de moyeu qu'elle comporte, conjuguée de la portée conique extérieure de l'essieu, vient s'appliquer et s'appuyer fermement contre cette portée conique, soit la tire vers l'intérieur et la maintient constamment dans sa position d'écartement normal où une deuxième portée conique interne de moyeu que la roue comporte, conjuguée de la portée conique intérieure de l'essieu, vient s'appliquer et s'appuyer fermement contre cette portée conique. De préférence, le vérin est un vérin à autoblocage qui assure le verrouillage des roues dans leurs deux positions d'écartement différent.

Pour bien comprendre les avantages qu'apporte l'ensemble roues-essieu selon l'invention par rapport aux ensembles à écartement variable connus, il convient d'abord de se rappeler la structure d'un essieu monté classique. Les deux roues sont emmanchées et calées à la presse sur deux portées cylindriques usinées à cet effet aux extrémités de l'essieu. Ce calage à la presse solidarise intimement les roues sur l'essieu, de sorte que la contrainte de pression existant entre chaque roue et l'essieu est suffisante pour s'opposer simultanément aux efforts de trois types dont la roue est le siège :

1. Les efforts dynamiques transversaux qui, dans leurs limites normales, ne doivent en aucune mesure entraîner un glissement axial de la roue sur l'essieu, qui aurait pour conséquence de modifier l'écartement des roues.

2. Les efforts dynamiques verticaux de matage des portées, occasionnés par les accélérations verticales imprimées aux masses suspendues du fait du passage sur les joints de raccordement des rails ou de l'existence d'irrégularités sur la voie ou sur le cercle de roulement du bandage des roues.

3. Les efforts de glissement de torsion entre l'alésage des roues et les portées de l'essieu, liés aux couples de freinage appliqués au cercle de roulement des roues par les sabots de frein ou aux couples de traction dans le cas d'un engin moteur.

L'ensemble roues-essieu objet de la présente invention répond à la triple condition de résister aux efforts que l'on vient de définir, en raison de sa structure particulière permettant, pour chaque écartement, un blocage des roues par coopération de portées coniques conjuguées appartenant aux roues et à l'essieu, l'effort de blocage appliqué axialement sur les roues pour presser l'une contre l'autre lesdites portées coniques étant maintenu constamment, de préférence grâce à l'usage d'un vérin à auto-blocage.

On sait qu'un vérin à auto-blocage, dit « auto-lock », est un vérin hydraulique doté sur sa tige d'une frette alésée à un diamètre inférieur à celui de la tige, le mouvement de coulissement de la tige n'étant rendu possible qu'après application d'une pression hydraulique dilatant suffisamment la frette. Au repos, la frette enserre fermement la tige du vérin et l'immobilise dans la position qu'elle avait prise.

Ainsi, dans la forme d'exécution préférée où l'on utilise un vérin à auto-blocage, celui-ci réalise, en l'absence de pression hydraulique appliquée à la frette, un assemblage entre roue et essieu de même nature que celui qui existe dans un essieu monté traditionnel.

Les efforts transversaux sont alors repris — dans un sens — directement par les portées coniques et — dans l'autre sens — par le vérin auto-bloqué, lequel est d'ailleurs capable de reprendre les efforts indifféremment dans l'un et l'autre sens.

La contrainte de blocage de l'assemblage conique élimine tout jeu entre chaque roue et l'essieu, de sorte que les efforts dynamiques verticaux ne risquent pas d'engendrer des phénomènes de matage nuisibles à l'efficacité de l'assemblage.

Enfin, pour les mêmes raisons découlant du blocage des roues sur l'essieu, les efforts de torsion sont repris exactement comme dans le cas des roues montées sur un essieu traditionnel.

On doit remarquer en outre que, du fait du maintien positif des roues par les portées coniques, l'indétermination du mode de calage traditionnel sur portées cylindriques, qui oblige à surdimensionner la liaison roue-essieu, est levée. En conséquence, un ensemble selon l'invention peut être calculé pour un effort n'excédant pas sensiblement la valeur limite des efforts transversaux que la voie peut supporter.

De préférence, le vérin précité commande les mouvements d'écartement et de rapprochement des roues par l'intermédiaire d'une paire de bras articulés démultiplicateurs de déplacement dont chacun est couplé à la roue correspondante par un pivot et un roulement calé sur le moyeu de la roue. Les forces de blocage du vérin sont ainsi multipliées au niveau des roues.

Le fait que les centres de poussée sur les portées coniques soient sensiblement confondus avec le centre d'application de l'effort de roulement sur une roue conduit à prévoir des portées coniques d'étendue assez grande suivant l'axe de l'essieu. Pour augmenter cette étendue en tenant compte des impératifs pratiques de construction, il convient de prévoir un chevauchement des portées coniques des roues. A cet effet, selon l'invention, les deux portées coniques de chaque roue sont complémentairement discontinues et s'interpénètrent, les deux portées de chaque extrémité de l'essieu étant de même discontinues afin de permettre encore les déplacements axiaux des roues. De préférence, les deux portées coniques de chaque roue s'interpénètrent totalement. Quant aux deux portées coniques de chacune des extrémités de l'essieu, elles peuvent s'interpénétrer, mais seulement partiellement.

Les interpénétrations prévues sont rendues possibles dans une forme d'exécution préférée de l'invention où les paires de portées coniques que comportent les roues et l'essieu sont constituées chacune par une couronne de patins individuels de forme identique, disposés parallèlement à l'axe de l'essieu, périphériquement côte à côte et alternativement dans un sens et dans l'autre de manière que l'ensemble des surfaces d'appui obliques qu'offrent les patins d'un même sens forment la surface conique de l'une des portées (correspondant à l'un des écartements), les surfaces obliques des autres patins formant ensemble la surface conique de l'autre portée (correspondant à l'autre écartement). De préférence, les patins constituant les portées coniques de chaque roue ont la forme d'un coin et sont logés dans un alésage central de la roue, entre des nervures de calage circonférentiel, des moyens de calage axial étant en outre prévus. Pour leur part, il convient que les patins constituant les portées coniques de l'essieu aient la forme d'un coin prolongé à son extrémité la moins épaisse par une extension d'épaisseur constante sensiblement égale à l'épaisseur minimale de la partie en forme de coin, et que ces patins soient disposés autour d'une portée cylindrique prévue à chaque extrémité de l'essieu et logés entre des cannelures de calage circonférentiel, des moyens de calage axial étant en outre prévus.

Pour assurer aux roues un guidage au cours de leurs changements de position sur l'essieu, il convient que chacun desdits patins de roue comporte une gorge creusée parallèlement à l'axe de l'essieu, dans laquelle est logé et immobilisé un barreau de même longueur que le patin, et que ce barreau coulisse par sa partie émergeant de la gorge dudit patin dans une gorge conjuguée pratiquée en regard dans le patin d'essieu correspondant, sur toute sa longueur. On notera que ces barreaux de guidage en coulissement sont en outre eux-mêmes de nature à s'opposer à tout glissement de torsion, c'est-à-dire en rotation, des roues par rapport à l'essieu.

La description qui va suivre, en regard des dessins annexés à titre d'exemples non limitatifs, permettra de bien comprendre comment l'invention peut être mise en pratique.

Les figures 1 à 5 illustrent schématiquement le principe mis en œuvre dans un ensemble roues-essieu à écartement variable selon l'invention.

Les figures 6 et 7 représentent respectivement un côté et le dessus d'un wagon équipé d'ensembles roues-essieu selon l'invention.

La figure 8 représente, à la manière de la figure 7, mais à plus grande échelle, un ensemble roues-essieu selon l'invention.

La figure 9 représentent une coupe suivant la ligne IX-IX de l'objet de la figure 8.

La figure 10 représente une moitié d'ensemble roues-essieu en coupe axiale suivant la ligne X-X de la figure 12.

Les figures 11 et 12 représentent des coupes de l'objet de la figure 10 respectivement suivant les lignes XI-XI et XII-XII.

Les figures 13 et 14 représentent en perspective une partie des portées coniques d'essieu et de roue composées de patins individuels.

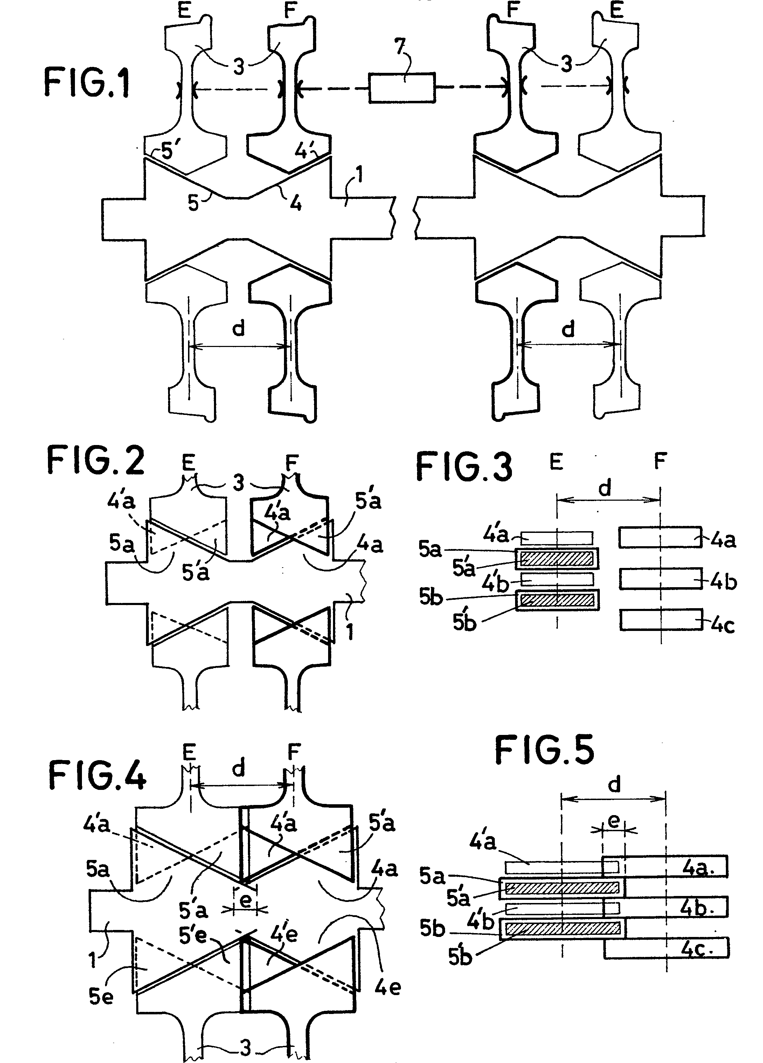

On voit sur la figure 1, représenté très schématiquement, un ensemble roues-essieu comprenant un essieu 1, constitué par un arbre monolithique, et une paire de roues 3. Celles-ci peuvent être déplacées au moyen d'un vérin 7 suivant l'axe de l'essieu 1 entre une position F où elles sont à l'écartement français et une position E où elles sont à l'écartement espagnol (plus grand que l'écartement français).

L'essieu 1 comporte à chaque extrémité une double portée conique 4, 5, en forme de diabolo, tandis que chaque roue comporte une double portée conique 4', 5' conjuguée. Ces portées sont conçues de telle manière que, à l'écartement français, la première portée 4' de chaque roue 3 coopère avec la portée intérieure 4 de l'essieu 1, c'est-à-dire la portée la plus proche du milieu de celui-ci, contre laquelle elle est pressée par le vérin 7, et que, à l'écartement espagnol, la deuxième portée 5' de chaque roue 3, qui s'est déplacée d'une quantité d vers l'extérieur sous l'action du vérin 7, coopère avec la portée extérieure 5 de l'essieu, contre laquelle elle est pressée par le vérin 7.

Afin d'élargir l'assise de chaque roue 3 sur l'une ou l'autre portée de la double portée 4, 5 correspondante de l'essieu 1, les portées 4' et 5' de la roue, au lieu d'être continues, peuvent être fractionnées en éléments distincts juxtaposés côte à côte et tête bêche (figures 2 et 3, cette dernière montrant partiellement, ainsi que la figure 5, le développement des portées d'essieu et de roue, la roue étant en position E), savoir en des éléments 4'a, 4'b, etc, orientés pour coopérer avec la portée intérieure 4 de l'essieu, en position F, et séparés par des éléments 5'a, 5'b, etc semblables mais orientés en sens inverse pour coopérer avec la portée extérieure 5 de l'essieu, en position E. L'étendue des portées 4' et 5' de chaque roue 2 suivant la direction axiale de l'essieu 1 peut alors être accrue et devenir égale à l'étendue des portées correspondantes 4 et 5 de l'essieu, ces dernières devant évidemment présenter alors, pour permettre les déplacements de la roue, une structure analogue à celle des portées 4' et 5' de la roue, c'est-à-dire être composées respectivement d'éléments 5a, 5b, etc et d'éléments 4a, 4b, etc séparés par des intervalles équivalents, les éléments d'une portée 4 ou 5 étant placés dans l'alignement des intervalles entre éléments de l'autre portée 5 ou 4, comme cela est visible sur la figure 3.

Il est possible, comme le montrent les figures 4 et 5, d'augmenter encore l'étendue axiale des surfaces coopérantes des portées 4, 5 et 4' 5' en accroissant l'étendue axiale des portées 4, 5 de l'essieu et en faisant s'interpénétrer leurs éléments 4a, b ..., 5a, b ... à la manière des éléments de portées coniques de la roue, mais bien entendu partiellement seulement, sur une longueur e. C'est sous cette dernière forme qu'est réalisé l'exemple d'exécution de l'invention qui va maintenant être décrit.

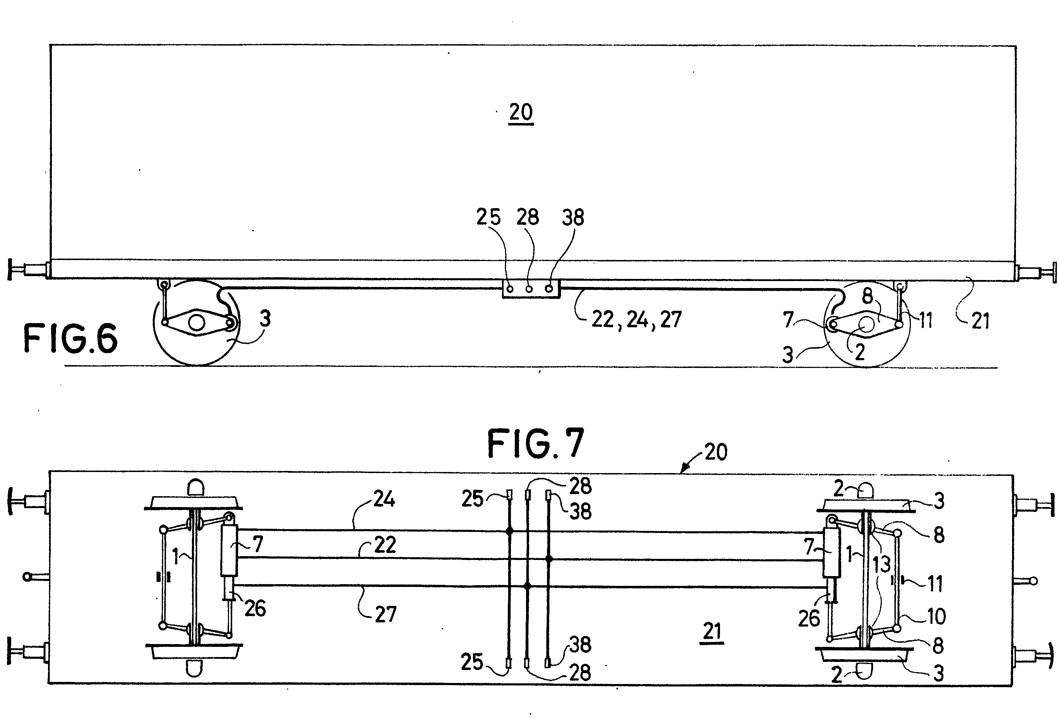

Les figures 6 et 7 montrent tout d'abord l'organisation générale d'ensembles selon l'invention équipant un wagon 20. Chacun des deux essieux 1 de ce wagon est monté sous le châssis 21 de celui-ci par l'intermédiaire de boîtes d'essieux 2 classiques, dont les organes de suspension au châssis 21 n'ont pas été représentés. Le vérin 7 associé à chaque essieu, disposé parallèlement à celui-ci, est articulé par l'extrémité de sa tige et le fond de son carter aux extrémités d'une paire de bras 8 dont les autres extrémités sont reliées par une barre articulée 10 suspendue en son milieu au châssis 21 oar une jambe anticouple 11. Le vérin 7, la barre 10 et les bras 8 forment un trapèze symétrique par rapport au plan de symétrie de l'essieu et du châssis du wagon. Chacun des bras 8 est articulé, à peu près en son milieu, au moyeu de la roue 3 correspondante par l'intermédiaire d'un roulement à rouleaux 13.

Les deux chambres d'alimentation des vérins 7, à double effet, sont reliées par des conduites 22, 24 à des prises de raccordement rapide 25, 38 situées en façade du châssis du wagon. La frette gonflable 26 de chaque vérin 7, du type à autoblocage, est reliée de même par une conduite 27 à des prises de raccordement 28. Par actionnement des vérins 7, il est possible de modifier l'écartement des roues 3 qui viennent se bloquer sur les portées coniques soit intérieures, soit extérieures des essieux 1.

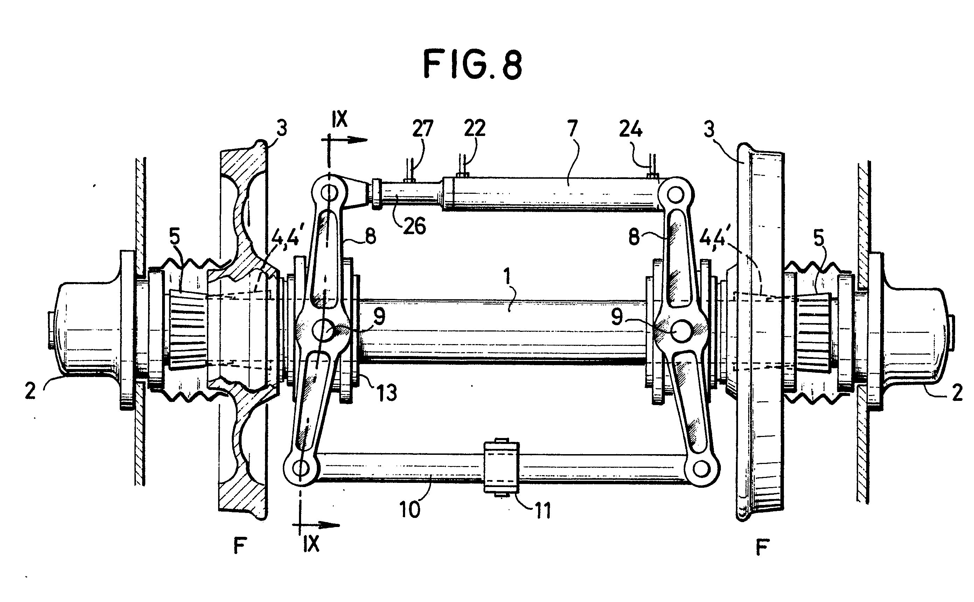

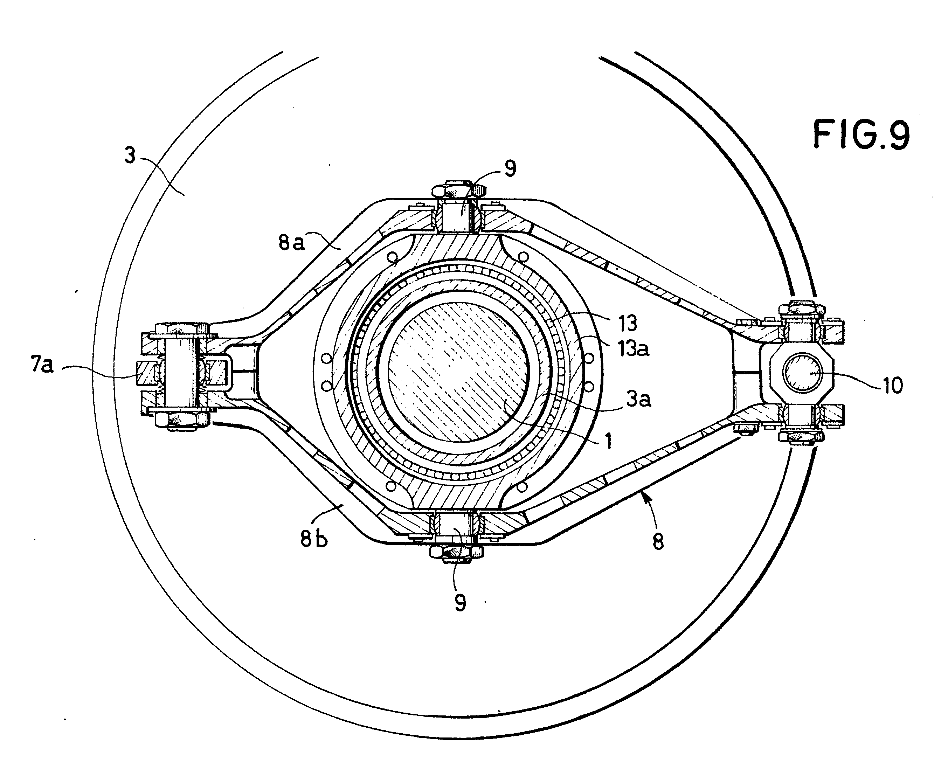

La figure 8 montre plus en détail la constitution d'un ensemble roues-essieu à écartement variable selon l'invention. On reconnaît sur cette figure l'essieu 1 et les boîtes 2 d'essieu, les roues 3 (en écartement français), les portées coniques 4, 5 de l'essieu 1, les roulements à rouleaux 13, les bras 8, le vérin 7, son manchon de frette « auto-lock » 26 et enfin la barre 10 et sa jambe de soutien 11. Comme on peut le voir sur la figure 9, les bras 8 comportent deux branches 8a, 8b passant de part et d'autre des roulements à rouleaux 13 et sont couplés à la cage externe 13a desdits roulements par des articulations à pivots verticaux 9. D'autre part, chaque roulement 13 est calé sur une jupe de moyeu 3a qu'offre la roue 3 correspondante. On voit également sur la figure 9, à chaque extrémité du bras 8 représenté, une articulation d'axe vertical couplant ce bras respectivement au vérin 7 par l'intermédiaire d'une chape 7a et à la barre 10.

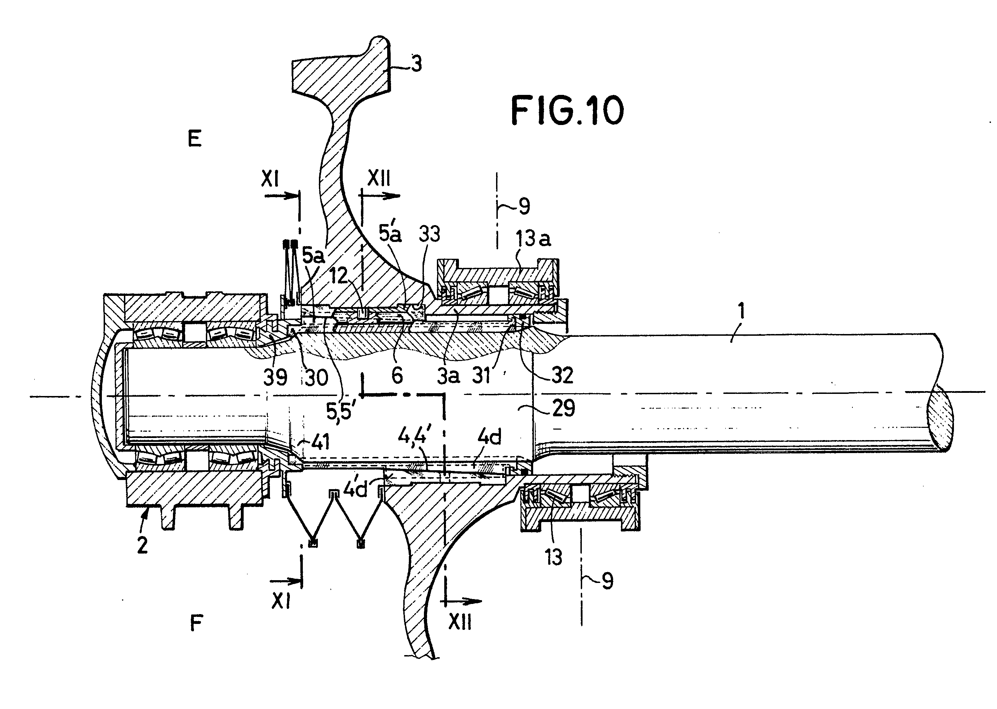

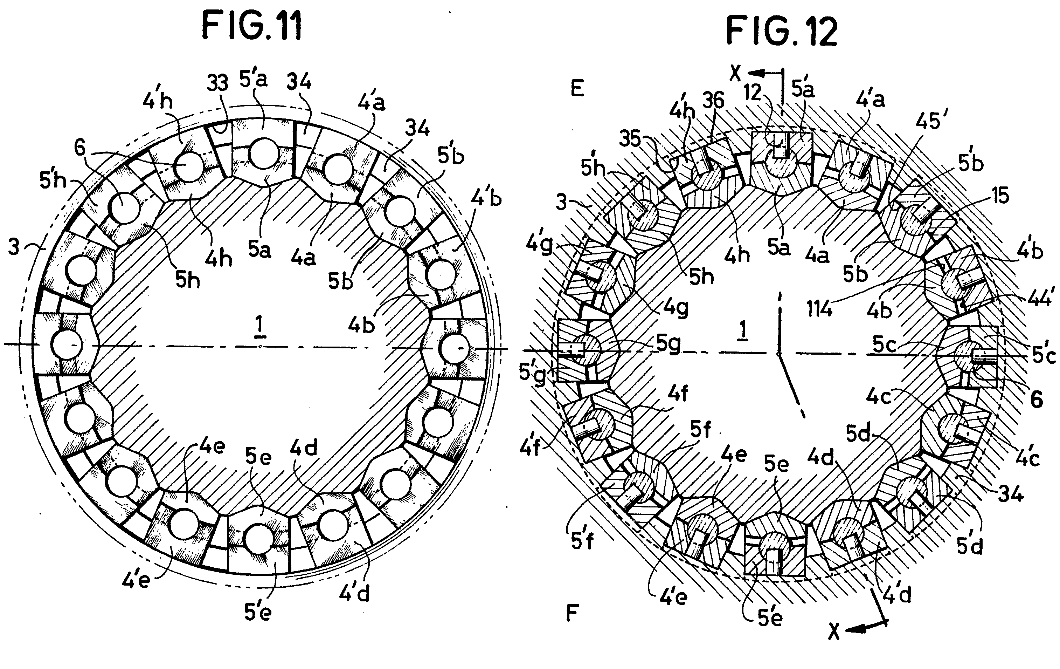

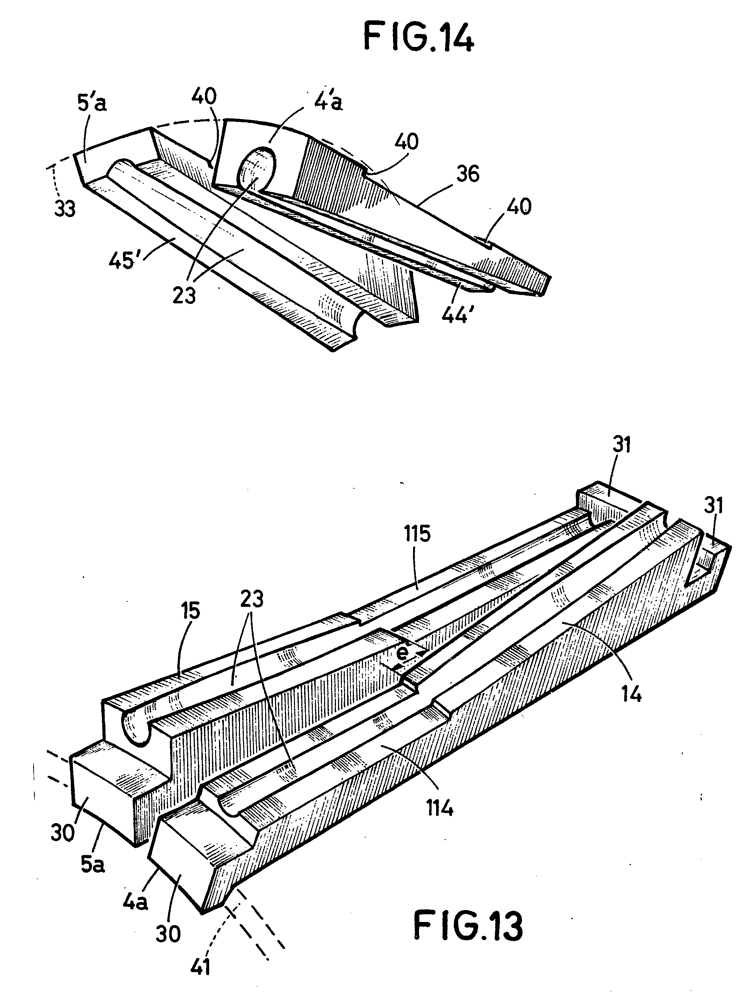

La figure 10 explicite la structure des portées coniques de l'une des roues 3 d'un essieu 1 et de l'extrémité correspondante de celui-ci. A cette extrémité est usinée une portée cylindrique 29, semblable à celles des essieux classiques destinées à recevoir les roues par emmanchement à force. Cette portée cylindrique est toutefois ici cannelée (figures 11 et 12) et comporte seize cannelures séparées par seize gorges dans lesquelles prennent place les éléments ou patins 4a à 4h, 5a à 5h de la double portée conique 4, 5 mentionnée précédemment. La base desdits patins présente une forme conjuguée de la forme des gorges de la portée cylindrique 29 ; la forme choisie dans le présent exemple correspond à une section droite en V. Ces patins sont ainsi calés angulairement. Ils sont calés longitudinalement par des talons 30, 31 qu'ils possèdent à leurs extrémités ; les talons 30 prennent appui contre la bordure extérieure 41 de la portée cylindrique 29 et s'engagent sous une bague de serrage 39 ; les talons 31 sont tenus par une autre bague 32 fixés autour de ladite portée, à son autre extrémité. Les patins 4'a à 4'h, 5'a à 5'h de la roue 3 sont montés en couronne à l'intérieur d'un alésage de moyeu 33 pratiqué au centre de la roue. Toutefois, dans la région médiane de cet alésage sont laissées des nervures 34 servant d'entretoises d'écartement auxdits patins et assurant le calage angulaire de ceux-ci. D'autre part, le fond 35 de la gorge apparaissant entre ces nervures 34 est légèrement réhaussé ; les patins de roue présentent à leur base une forme complémentaire grâce à une partie fraisée 36, de sorte qu'ils se trouvent calés longitudinalement dans les deux sens par de petites marches 40 (figure 14).

Les patins de l'essieu 1 ont la forme représentée à la figure 13. Ils comportent chacun une partie 14 ou 15 en forme de coin, l'ensemble des parties 14 constituant la portée conique 4 et l'ensemble des parties 15 la portée conique 5, et une partie 114 ou 115 dont l'épaisseur est sensiblement égale ou un peu inférieure à celle de l'extrémité la moins épaisse de la partie 14 ou 15 attenante. Les parties 14, 114 et 15, 115 des patins juxtaposés successifs se présentent tête bêche, les parties inclinées 14, 15 se chevauchant sur la longueur e déjà mentionnée.

Les patins de roue 4'a à 4'h, 5'a à 5'h sont tous identiques. Ils sont montés tête bêche dans l'alésage central 33 de la roue (figure 14), de manière que les portées coniques 4' formée par les faces obliques 44' des patins 4'a à 4'h et 5' formée par les faces obliques 45' des patins 5'a à 5'h s'interpénètrent complètement. Bien entendu, la pente desdites faces d'appui obliques 44', 45' de ces patins est rigoureusement identique à celle des faces d'appui conjuguées 14, 15 des patins d'essieu.

Pour réaliser industriellement les patins individuels composant les diverses portées coniques de roue et d'essieu, on pourra procéder par division d'un cylindre creux dont la paroi externe (pour les patins d'essieu) ou la paroi interne (pour les patins de roue) aura préalablement été tournée suivant la conicité requise pour les portées (de l'ordre de 10 %) et dont l'autre paroi interne ou externe est usinée au profil cannelé des portées cylindriques 29 d'essieu ou de l'alésage central des roues. Ce mode opératoire garantit avec une précision optimale la concentricité des patins de chaque portée conique, indispensable à la fiabilité de l'assemblage par portées coniques.

Chacun des patins de roues et d'essieu comporte une gorge 23 formée par une cavité longitudinale de section ronde, s'ouvrant sur les faces en regard des patins et constituant des demi-logements pour des barreaux 6 qui y sont insérés et qui sont retenus et immobilisés dans les patins de roue, dont ils ont la longueur, par des clavettes 12. Le déplacement de chaque roue 3 entre ses positions E et F s'effectue ainsi par glissement de translation des barreaux 6 dans les demi-logements des patins d'essieu.

La puissance de blocage des vérins 7 à frette « auto-lock » est déterminée en fonction des seuls efforts transversaux tendant à faire varier l'écartement des roues, eux-mêmes définis directement — l'indétermination de calage des roues d'essieux montés classiques ayant disparu grâce à la présence des portées coniques — par la valeur limite des efforts transversaux que la voie peut supporter, ainsi qu'on l'a déjà expliqué. En France, cette valeur limite est d'environ 8 tonnes. En négligeant tout frottement de contact, la puissance de blocage peut théoriquement, dans ces conditions et compte tenu de la démultiplication des bras articulés 8, être fixée à 4 tonnes. Le choix d'une puissance de blocage de 10 tonnes offrirait donc un large coefficient de sécurité. Comme rien ne s'oppose à la mise en œuvre d'un « auto-lock » encore plus puissant, il est clair qu'un ensemble roues-essieu selon l'invention peut offrir un coefficient de sécurité au moins égal à celui d'un essieu monté traditionnel. On parvient ainsi aisément à un ensemble à écartement variable de charge nominale égale à 20 ou 22 tonnes pour une vitesse de circulation supérieure à 120 km/h, qui est interchangeable sans difficulté avec un essieu monté classique.

Pour effectuer les changements d'écartement d'un train dont les wagons sont équipés d'ensembles roues-essieu selon l'invention, on peut imaginer, par exemple à la frontière franco-espagnole, une voie mixte comportant une file à l'écartement français et une file à écartement espagnol, cette voie étant bordée, de part et d'autre, d'élévateurs avec commande mécanisée de sortie ou d'effacement de bras de levage. Un wagon étant immobilisé, un opérateur commande l'engagement des bras de levage sous la caisse du wagon, puis l'élévation de ce dernier, d'une dizaine de centimètres seulement, pour dégager le boudin des roues compte tenu de la détente des suspensions. Il lui suffit alors de raccorder les circuits d'alimentation du vérin et de sa frette d'auto-blocage au moyen des prises d'accouplement rapide 25, 28 et 39 à auto-obturation (figure 7) à un groupe générateur avec organes de distribution, installé au sol. Avec un groupe de quelques kilowatts, les opérations peuvent alors se dérouler très rapidement, suivant les temps approximatifs ci-après :

— une à deux secondes pour la mise en pression des frettes d'auto-blocage 26 en vue de libérer la tige des vérins 7 ;

— une dizaine de secondes pour que la tige des vérins effectue sa course totale (égale au double de la différence des écartements français et espagnol, soit 468 mm) ;

— un temps négligeable pour le blocage des frettes 26 ;

— une à deux secondes pour la décompression des vérins 7 ;

— dix à quinze secondes pour la déconnexion des trois raccords rapides 25, 28, 38.

En vue d'une sécurité parfaite, on peut prévoir, de part et d'autre des rails, des capteurs électriques pour constater que le positionnement des roues est correct et donner le feu vert à l'évacuation du wagon.

En ce qui concerne les applications pratiques de l'invention, il y a lieu de distinguer le cas des wagons de marchandises du cas des voitures de voyageurs.

Les wagons marchandises représentant un parc très important et très diversifié, leur équipement doit être le plus simple et le plus léger possible. Il est donc souhaitable que, dans ce cas, l'équipement nécessaire au fonctionnement des ensembles roues-essieu — centrale hydraulique et organe de commande — soit placé au sol, avec les installations fixes, conformément à l'exposé précédent sur la mise en œuvre des ensembles selon l'invention.

Dans le cas des voitures de voyageurs, compte tenu de leur plus petit nombre et de leur prix beaucoup plus élevé, il est préférable au contraire que l'équipement générateur soit placé à bord, afin de permettre une automatisation complète des opérations de changement d'écartement.

## Revendications

1. Ensemble roues-essieu à écartement variable pour véhicule ferroviaire comprenant un essieu monolithique (1), portant une paire de roues (3) déplaçables entre deux positions verrouillées, respectivement d'écartement normal et de grand écartement, caractérisé par le fait que ledit essieu (1) comporte, à chaque extrémité, deux portées coniques (4, 5) dont l'ensemble a la forme d'un diabolo, et que chaque roue (3) peut se déplacer par simple translation sous l'action d'un vérin (7) qui, soit la repousse vers l'extérieur et la maintient constamment dans sa position de grand écartement (E) où une première portée conique interne (5') de moyeu qu'elle comporte, conjuguée de la portée conique extérieure (5) de l'essieu (1), vient s'appliquer et s'appuyer fermement contre cette portée conique (5), soit la tire vers l'intérieur et la maintient constamment dans sa position d'écartement normal (F), où une deuxième portée conique interne (4') de moyeu que la roue (3) comporte, conjuguée de la portée conique intérieure (4) de l'essieu (1) vient s'appliquer et s'appuyer fermement contre cette portée conique (4).

2. Ensemble selon la revendication 1, caractérisé par le fait que le vérin (7) est un vérin à auto-blocage qui assure le verrouillage des roues (3) dans leurs deux positions (E, F).

3. Ensemble selon la revendication 1 ou 2, caractérisé par le fait que le vérin (7) commande les mouvements d'écartement et de rapprochement des roues (3) par l'intermédiaire d'une paire de bras articulés (8) démultiplicateurs de déplacement dont chacun est couplé à la roue (3) correspondante par un pivot (9) et un roulement (13) calé sur le moyeu de la roue (3).

4. Ensemble selon l'une quelconque des revendications 1 à 3, caractérisé par le fait que les deux portées coniques (4', 5') de chaque roue (3) sont complémentairement discontinues et s'interpénètrent, les deux portées (4, 5) de chaque extrémité de l'essieu (1) étant de même discontinues.

5. Ensemble selon la revendication 4, caractérisé par le fait que les deux portées coniques (4', 5') de chaque roue (3) s'interpénètrent totalement.

6. Ensemble selon la revendication 4 ou 5, caractérisé par le fait que les deux portées coniques (4, 5) de chacune des extrémités de l'essieu (1) s'interpénètrent partiellement.

7. Ensemble selon l'une quelconque des revendications 4 à 6, caractérisé par le fait que les portées coniques (4, 5, 4', 5') sont constituées chacune par une couronne de patins individuels (4' b ..., 5a, b ..., 4'a, b ..., 5'a, b ...) de forme identique, disposés parallèlement à l'axe de l'essieu (1) périphériquement côte à côte et alternativement dans un sens et dans l'autre de manière que l'ensemble des surfaces d'appui obliques (14, 15, 44', 45') que comportent les patins d'un même sens forment la surface conique de l'une des portées, les surfaces obliques des autres patins formant ensemble la surface conique de l'autre portée.

8. Ensemble selon la revendication 7, caractérisé par le fait que les patins (4'a, b ..., 5'a, b ...) constituant les portées coniques (4', 5') de chaque roue (3) ont la forme d'un coin et sont logés dans un alésage central (33) de la roue, entre des nervures (34) de calage circonférentiel, des moyens (40) de calage axial étant en outre prévus.

9. Ensemble selon la revendication 7 ou 8, caractérisé par le fait que les patins (4a, b ..., 5a, b ...) constituant les portées coniques (4, 5) de l'essieu ont la forme d'un coin prolongé à son extrémité la moins épaisse par une extension (114, 115) d'épaisseur constante sensiblement égale à l'épaisseur minimale de la partie en forme de coin, et que ces patins sont disposés autour d'une portée cylindrique (29) prévue à chaque extrémité de l'essieu (1) et logés entre des cannelures de calage circonférentiel, des moyens (30, 31) de calage axial étant en outre prévus.

10. Ensemble selon l'une quelconque des revendications 7 à 9, caractérisé par le fait que chaque patin de roue (4'a, b ..., 5'a, b ...) comporte une gorge (23) creusée parallèlement à l'axe de l'essieu (1), dans laquelle est logé et immobilisé un barreau (6) de même longueur que le patin, et que ce barreau coulisse par sa partie émergeant de la gorge (23) dudit patin dans une gorge conjuguée (23) pratiquée en regard dans le patin d'essieu (4a, b ..., 5a, b ...) correspondant, sur toute sa longueur, de manière à guider la roue (3) dans ses changements de position.

**Claims**

1. Variable track-width wheel-axle assembly for rail vehicle comprising a monolithic axle (1) carrying a pair of wheels (3) displaceable between two locked-up positions, for normal track-width and for large track-width respectively, characterised by the fact that said axle (1) is provided at each end with two tapering bearings (4, 5) which in combination have the shape of a diabolo, and that each wheel (3) can be displaced by simple translatory motion by the operation of a jack (7) which either pushes the wheel outwards and maintains it constantly in its large track-width position (E) where a first internal tapering bearing (5') of the hub which forms part of the wheel, said bearing (5') being conjugate with respect to the outer tapering bearing (5) of the axle (1), comes into use and bears firmly against that tapering bearing (5), or pulls the wheel inwards and maintains it constantly in its normal track-width position (F) where a second internal tapering bearing (4') of the hub which forms part of the wheel (3), said bearing (4') being conjugate with respect to the inner tapering bearing (4) of the axle (1), comes into use and bears firmly against that tapering bearing (4).

2. Assembly according to claim 1, characterised by the fact that the jack (7) is a self-locking jack which ensures the locking-up of the wheels (3) in their two positions (E, F).

3. Assembly according to claim 1 or 2, characterised by the fact that the jack (7) controls the track-width movements and the bringing together of the wheels (3) through the intermediary of a pair of displacement-reduction articulated arms (8) each of which is coupled to the corresponding wheel (3) by a pivot (9) and a rolling bearing (13) fixed on the hub of the wheel (3).

4. Assembly according to any one of claims 1 to 3, characterised by the fact that the two tapering bearings (4', 5') of each wheel (3) are complementarily discontinuous and interpenetrate each other, the two bearings (4, 5) at each end of the axle (1) having the same discontinuity.

5. Assembly according to claim 4, characterised by the fact that the two tapering bearings (4', 5') of each wheel (3) are wholly interpenetrating.

6. Assembly according to claim 4 or 5, characterised by the fact that the two tapering bearings (4, 5) at each of the ends of the axle (1) are partially interpenetrating.

7. Assembly according to any one of claims 4 to 6, characterised by the fact that the tapering bearings (4, 5, 4', 5') are each constituted by a ring of individual fillets (4a, b ..., 5a, b ..., 4'a, b ..., 5'a, b ...) of identical shape, positioned parallel to the axis of the axle (1), circumferentially side-by-side and alternately in one sense and in the other in a manner such that the combination of the sloping contact surfaces (14, 15, 44', 45') defined by the fillets of one common sense form the tapering surface of one of the bearings, the sloping surfaces of the other fillets together forming the tapering surface of the other bearing.

8. Assembly according to claim 7, characterised by the fact that the fillets (4'a, b ..., 5'a, b ...) constituting the tapering bearings (4', 5') of each wheel (3) are in the form of wedges and are housed within a central bore (33) in the wheel, between ribs (34) providing circumferential clamping, axial clamping means (40) being provided additionally.

9. Assembly according to claim 7 or 8, characterised by the fact that the fillets (4a, b ..., 5a, b ...)

constituting the tapering bearings (4, 5) of axle are each in the form of a wedge extended at its end of lesser thickness by an extension (114, 115) of constant thickness substantially equal to the minimum thickness of the part formed as a wedge, and that these fillets are positioned around a cylindrical bearing (29) provided at each end of the axle (1) and are housed between circumferential clamping grooves, axial clamping means (30, 31) being provided additionally.

10. Assembly according to any one of claims 7 to 9, characterised by the fact that each wheel fillet (4'a, b ..., 5'a, b ...) has a channel (23) extending parallel to the axis of the axle (1), in which a rod (6) of the same length as the fillet is housed and immobile, and that this rod slides, via its part which projects from the channel (23) of the said fillet into a conjugate channel (23) practically opposite in the corresponding axle fillet (4a, b ..., 5a, b ...), along its whole length, in a manner such as to guide the wheel (3) in its changes of position.

**Ansprüche**

1. Anordnung von Rad und Achswelle für Eisenbahnwaggons bei veränderbarem Radabstand, mit einer einteiligen Achswelle (1) und zwei daran angebrachten Rädern (3), die in zwei durch Verriegelung gesicherte Stellungen bringbar sind, und zwar in eine Stellung mit normalem Radabstand und eine Stellung mit großem Radabstand, dadurch gekennzeichnet, daß die Achswelle (1) an ihren beiden Enden jeweils zwei konische Lagerflächen (4, 5) aufweist, die zusammen die Gestalt eines sanduhrförmigen Körpers haben, und daß jedes Rad (3) sich durch eine einfache Parallelbewegung unter der Wirkung eines Arbeitszylinders (7) verschieben läßt, der entweder das Rad nach außen drückt und es ständig in seiner Position mit großem Abstand (E) festhält, wobei an dem Rade eine erste innere konische Nabenlagerfläche (5'), die der äußeren konischen Lagerfläche (5) der Achswelle (1) zugeordnet ist, sich an dieser konischen Lagerfläche (5) abstützt und sich fest gegen sie legt, oder das Rad nach innen zieht und es ständig in seiner Position mit normalem Abstand (F) festhält, wobei an dem Rade eine zweite innere konische Nabenlagerfläche (4'), die der inneren konischen Lagerfläche (4) der Achswelle (1) zugeordnet ist, sich an dieser konischen Lagerfläche (4) abstützt und sich fest gegen sie legt.

2. Anordnung nach Anspruch 1, dadurch gekennzeichnet, daß der Arbeitszylinder (7) als selbstsperrender Zylinder ausgebildet ist, der die Verriegelung der Räder (3) in ihren beiden Positionen (E, F) herbeiführt.

3. Anordnung nach Anspruch 1 oder 2, dadurch gekennzeichnet, daß der Arbeitszylinder (7) die Auseinander- und Zueinanderbewegung der Räder (3) mit Hilfe zweier eine Verschiebung ausführender Untersetzungsgelenkarme (8) steuert, von denen jeweils einer durch einen Zapfen (9) und ein Wälzlager (13), das auf die Radnabe gekeilt ist, mit einem zugeordneten Rad (3) gekoppelt ist.

4. Anordnung nach einem der Ansprüche 1 bis 3, dadurch gekennzeichnet, daß die beiden konischen Lagerflächen (4', 5') jedes Rades (3) komplementär unstetig sind und sich gegenseitig durchdringen, und daß die beiden Lagerflächen (4, 5) der beiden Enden der Achswelle (1) dieselben Unstetigkeiten aufweisen.

5. Anordnung nach Anspruch 4, dadurch gekennzeichnet, daß die beiden konischen Lagerflächen (4', 5') jedes Rades (3) sich gegenseitig vollständig durchdringen.

6. Anordnung nach Anspruch 5 oder 6, dadurch gekennzeichnet, daß die beiden konischen Lagerflächen (4, 5) an jedem der beiden Enden der Achswelle (1) sich gegenseitig teilweise durchdringen.

7. Anordnung nach einem der Ansprüche 4 bis 6, dadurch gekennzeichnet, daß die beiden konischen Lagerflächen (4, 5, 4', 5',) jeweils aus einem Kranz von Einzelkufen (4a, b ..., 5a, b ..., 4'a, b ..., 5'a, b ...) übereinstimmender Form bestehen, die parallel zur Achse der Achswelle (1) in Umfangsrichtung nebeneinander und abwechselnd in der einen oder der anderen Richtung angeordnet sind, so daß die Gruppe der schrägen Stützflächen (14, 15, 44', 45'), welche die in ein und derselben Richtung laufenden Kufen bilden, die konische Oberfläche der einen Lagerfläche darstellt, während die Schrägflächen der anderen Kufen zusammen die konische Oberfläche der anderen Lagerfläche darstellen.

8. Anordnung nach Anspruch 7, dadurch gekennzeichnet, daß die Kufen (4'a, b ..., 5'a, b ...) jedes Rades (3) die Form eines Keils haben und in einer Mittelbohrung (33) des Rades zwischen in Umfangsrichtung liegenden Verkeilungsrippen (34) angeordnet sind, und daß außerdem axiale Verkeilungseinrichtungen (40) vorgesehen sind.

9. Anordnung nach Anspruch 7 oder 8, dadurch gekennzeichnet, daß die die konischen Lagerflächen (4, 5) der Achswelle bildenden Kufen (4a, b ..., 5a, b ...) die Form eines Keils haben, der an seinem am wenigsten dicken Ende durch einen Fortsatz (114, 115) gleichbleibender Dicke verlängert ist, die praktisch gleich der kleinsten Dicke des keilförmigen Teils ist, daß diese Kufen um eine an jedem Ende der Achswelle 81 vorgesehene zylindrische Lagerfläche (29) herum angeordnet und zwischen am Umfang angebrachten Verkeilungsriffeln aufgenommen sind, und daß außerdem axiale Verkeilungsmittel (30, 31) vorgesehen sind.

10. Anordnung nach einem der Ansprüche 7 bis 9, dadurch gekennzeichnet, daß jede Radkufe (4'a, b ..., 5'a, b ...) eine Hohlkehle (23) parallel zu der Achse der Achswelle (1) aufweist, in die ein Stab (6) gleicher Länge wie die Kufe aufgenommen und darin festgelegt ist, und daß dieser Stab mit seinem aus der Hohlkehle (23) der betreffenden Kufe herausragenden Ende mit seiner ganzen Länge in einer zugeordneten Hohlkehle (23) verschiebbar ist, die gegenüberstehend in der zugeordneten Achskufe (4a, b ..., 5a, b ...) der Achswelle vorgesehen ist, um auf diese Weise das Rad (3) bei seinen Positionsänderungen zu führen.

FIG.1

FIG.2

FIG.3

FIG.4

FIG.5

**FIG.6**

**FIG.7**

# FIG.8

0 031 757

0 031 757

FIG.9

FIG.10

# FIG.11

# FIG.12

0 031 757

# FIG.14

# FIG.13